# EUROPEAN PATENT APPLICATION

(11) **EP 2 894 932 A1**
(43) Date of publication of application: **15.07.2015**
(21) Application number: 14305044.1
(22) Date of filing: 13.01.2014
(51) Int. Cl.: H04W 76/04, H04M 15/00, H04M 15/12

(54) **Call time management**

(71) Applicant: ALCATEL LUCENT, 92100 Boulogne-Billancourt (FR)
(72) Inventor: Kashyap, Gaurav, 122016 Gurgaon (IN); Bhatt, Subha, 122016 Gurgaon (IN); Rustagi, Saket, 122016 Gurgaon (IN)
(74) Representative: Mouney, Jérôme

(57) **Abstract**

Call time management of a voice communication established by a communication device (CD) with another communication device within a wireless telecommunication network (TN) via a base station (BTS). A network element triggers a counter associated with the voice communication, identifies speech frames and non-speech frames received by the base station from traffic frames sent by the communication device and said another communication device using a discontinuous transmission. The counter, that is incremented when non-speech frames are received and set to "0" each time a speech frame is received, is used to determine whether the counter has exceeded a predefined upper limit value in order to disconnect the voice communication.

## Description

### FIELD OF THE INVENTION

The present invention pertains to the management of communications in a telecommunication network, more especially in a wireless telecommunication network.

### BACKGROUND

Currently, telecommunication service providers use charging systems in order to charge their customers based on service usage, especially based on the minutes consumed by the users for voice communications.

There is a need to improve the customer experience and to offer charging plan adapted to the network resources usage by the customer.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for for call time management of a voice communication established by a communication device with another communication device within a wireless telecommunication network via a base station, comprising the following steps in a network element included in the telecommunications network:
triggering a counter associated with the voice communication,
identifying speech frames and non-speech frames received by the base station from traffic frames sent by the communication device and said another communication device using a discontinuous transmission,
evaluating the counter to determine whether the counter has exceeded a predefined upper limit value in order to disconnect the voice communication.

Advantageously, the invention offers an additional feature to the telecommunication network, allowing it to offer new tariff plan in the market wherein charging of voice calls is on the basis of speaking usage only, and to optimize the resources and the usage of the telecommunication network.

Also, the invention is applicable for free and fixed normal voice calls.

Additionally, the invention enhances system capacity by reducing interference in adjacent cells and to mobile communication devices close to the base station. Furthermore, as transmit time is reduced when discontinuous transmission is used, the power consumption of mobile communication devices is reduced, which gives users the option of fitting their mobile communication devices with smaller batteries.

In an embodiment, the network element contains a discontinuous transmission handle triggered to monitor the speech activity of the user of the communication device, in order to assess whether the signal of the voice communication contains speech or not.

In an embodiment, the counter is acting as a clock.

In an embodiment, the triggered counter is set to a value corresponding to the start of the call.

In an embodiment, the counter is incrementing as non-speech frames are received and is reset each time a speech frame is received.

In an embodiment, the network element notifies the users of the communication device and said another communication device before disconnection of the voice communication.

In an embodiment, the notification is provided via a beep tone or a short message.

The invention also pertains to a network element for for call time management of a voice communication established by a communication device with another communication device within a wireless telecommunications network via a base station, the network element comprising:
means for triggering a counter associated with the call,
means for identifying speech frames and non-speech frames received by the base station from traffic frames sent by the communication device and said another communication device using a discontinuous transmission,
means for evaluating the counter to determine whether the counter has exceeded a predefined upper limit value in order to disconnect the voice communication.

In an embodiment, the network element is included in the base station.

In an embodiment, the network element is included in a base station controller.

The invention also pertains to a computer program capable of being implemented within a network element, said program comprising instructions which, when the program is executed within said network element, carry out steps according to the method according to the invention.

### BRIEF DESCRIPTION OF THE FIGURES

The present invention and the benefits thereof shall be better understood upon examining the description below, which makes reference to the attached figures, in which:
- FIG. 1 is a schematic block diagram of a communication system according to one embodiment of the invention for call time management in a telecommunication network; and
- FIG. 2 is an algorithm of a method for call time management in a telecommunication network according to one embodiment of the invention.

The same reference number represents the same element or the same type of element on all drawings.

### DESCRIPTION OF EMBODIMENTS

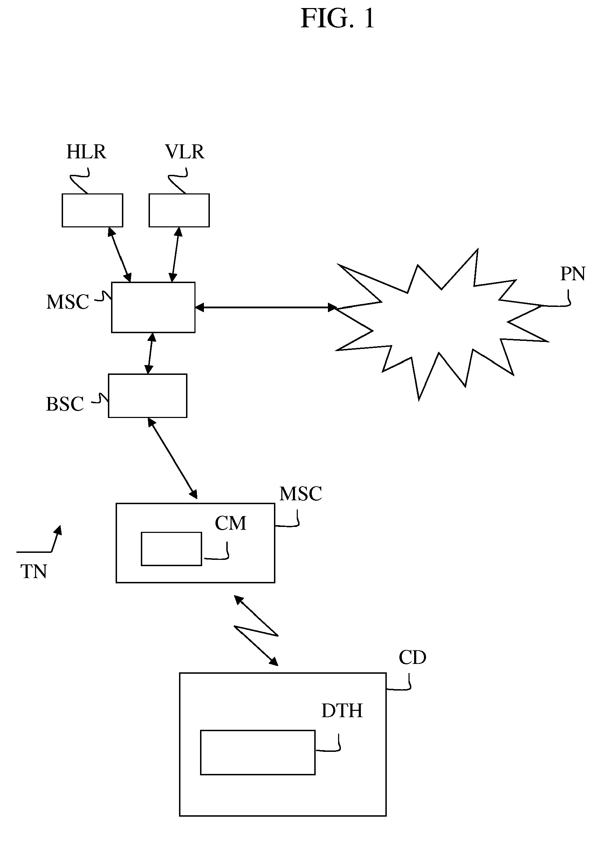

With reference to FIG. 1, a communication system according to the invention comprises a telecommunication network TN, a communication device CD, a network element like a switch MSC, and a charging server CS.

For example, the telecommunication network TN is a GSM (Global System for Mobile communications) or UMTS (Universal Mobile Telecommunications System), or LTE (Long Term Evolution) digital cellular radio communication network. The telecommunication network TN may be coupled with a packet network PN, like a GPRS (General Packet Radio Service) network for the transmission of data by packets with mobility and access management via radio. The packet network PN is a high-speed IP network, such as the Internet.

Figure 1 depicts components of the location area of the telecommunication network TN of GSM type where the communicating device CD is situated. The location area comprises an MSC (Mobile service Switching Center) which is connected by means of a BSC (Base Station Controller) to a base station BTS (Base Transceiver Station) connected by means of a radio link to the communicating device CD.

The telecommunication network TN comprises a location register HLR (Home Location Register) and one or more VLR (Visitor Location Register) location registers connected to the switch MSC. The HLR register is similar to a database containing an international identity IMSI (International Mobile Subscriber Identity) associated with a subscription profile for each user in the telecommunication network TN. The register VLR is a relay of the register HLR and contains characteristics of the users located in the location area to manage their mobility.

Within the telecommunication network TN, the base station controller BSC and switch MSC can be respectively connected to a service node SGSN (Serving GPRS Support Node) and a gateway-node GGSN (Gateway GPRS Support Node).

The communication device CD is capable of establishing a communication within a telecommunication network TN, for example with another user terminal. A communication device CD may, for instance, be a mobile telephone, an electronic telecommunication device or object that is personal to the user and which may be a personal digital assistant (PDA) or a smartphone.

The communication device CD comprises a discontinuous transmission handler DTH.

For example, the discontinuous transmission handler DTH may comprise a speech encoder, a voice activity detector and a comfort noise computation in accordance with document ETSI EN 301 707 V7.4.0.

The discontinuous transmission handler DTH passes traffic frames, individually marked by TX_TYPE, to the radio subsystem of the telecommunication network, i.e. the base station BTS. Each frame passed to the base station consists of bit fields containing the information bits, the codec mode indication, and the TX_TYPE. TX_TYPE is used to specify the contents of the frame.

The voice activity detector classifies the input signal into active speech, inactive speech or background noise. Based on the classification, the discontinuous transmission handler DTH inserts Silence Insertion Descriptor (SID) frames during the silence intervals. During silence, SID's frames are periodically sent to the comfort noise computation module, which generates ambient noise during periods of inactive speech on the receive side.

The network element like the base station or the base station controller comprises a call manager CM able to monitor a voice channel and to disconnect a voice communication.

The charging module CM implements a counter, that is triggered at the start of a call and reset when speech frame is received from one of the participants of the call.

A maximum value of the counter can be set and be used to disconnect a call when no speech frame has been received during a time period corresponding to the maximum value of the counter.

Optionally, the network element can notify users before disconnection of the call. For example, the notification can be provided via a beep tone or a short message. The notification can be provided some time before the disconnection of the call.

Optionally, if a user puts a call on hold, the network element can take into account holding time or not.

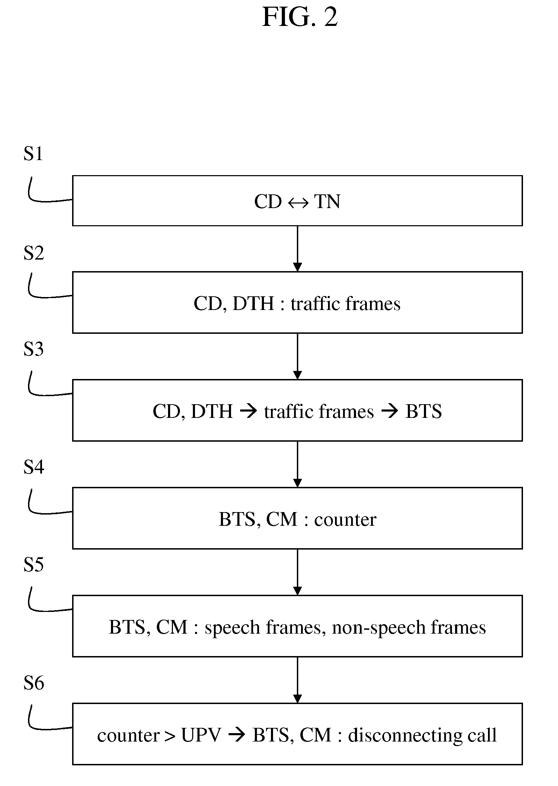

With reference to FIG. 2, a method for call time management in a wireless telecommunication network according to one embodiment of the invention comprises steps S1 to S6 executed within the communication system.

In step S1, the communication device CD establishes a voice communication with a communication entity within the network TN via a base station BTS, for example with another communication device.

The discontinuous transmission handle DTH is triggered to monitor the speech activity of the user. The discontinuous transmission handler DTH may be operating all the time in order to assess whether the input signal contains speech or not.

In step S2, the discontinuous transmission handle DTH provides traffic frames, each frame comprising bit fields containing the information bits, the codec mode indication, and the TX_TYPE. Additionally, the discontinuous transmission handle DTH assigns a binary flag (VAD flag ="1" when signal contains speech or VAD flag ="0" when signal does not contain speech, respectively) on a frame by frame basis. The VAD flag controls indirectly the overall discontinuous transmission operation on the transmit side.

In step S3, the discontinuous transmission handler DTH transmits traffic frames to the radio subsystem of the telecommunication network, e.g. the base station BTS. The base station BTS is able to handle the received traffic frames according to the discontinuous transmission mechanism.

In step S4, the call manager CM of the base station BTS triggers a counter associated with the voice communication.

In step S5, the call manager CM of the base station BTS identifies speech frames and non-speech frames among the received frames till the end of the voice communication.

For example, the counter is acting as a clock and is set to the value "0" corresponding to the start of the call. The counter is incrementing as non-speech frames are received and is reset to the "value "0" each time a speech frame is received. The received speech frame can be originated from the communication device CD or said another communication device.

In step S6, the call manager CM of the base station evaluates the counter to determine whether the counter has exceeded a predefined upper limit value UPV. If the counter exceeds the predefined upper limit value UPV, corresponding to a maximum value of the counter previously defined, the base station disconnects the call. When the counter exceeds the predefined upper limit value, it means that no speech frame has been received during a time period corresponding to the maximum value of the counter.

In another embodiment, steps S4 to S6 are executed in a base station controller BSC controlling the base station BTS through which the call is established.

The invention described here relates to a method and a network element for call time management of communications in a telecommunication network. According to one implementation of the invention, the steps of the invention are determined by the instructions of a computer program incorporated into the network element. The program comprises program instructions which, when said program is loaded and executed within the network element, carry out the steps of the method.

Consequently, the invention also applies to a computer program, particulary a computer program on or within an information medium, suitable to implement the invention. This program may use any programming language, and be in the form of source code, object code, or intermediate code between source code and object code, such as in a partially compiled form, or in any other form desirable for implementing the method according to the invention.

## Claims

1. A method for call time management of a voice communication established by a communication device (CD) with another communication device within a wireless telecommunication network (TN) via a base station (BTS), comprising the following steps in a network element included in the telecommunications network:
triggering (S4) a counter associated with the voice communication,
identifying (S5) speech frames and non-speech frames received by the base station from traffic frames sent by the communication device and said another communication device using a discontinuous transmission,
evaluating (S6) the counter to determine whether the counter has exceeded a predefined upper limit value in order to disconnect the voice communication.

2. A method according to claim 1, whereby the network element contains a discontinuous transmission handler triggered to monitor the speech activity of the user of the communication device, in order to assess whether the signal of the voice communication contains speech or not.

3. A method according to clam 1 or 2, whereby the counter is acting as a clock.

4. A method according to any of claims 1 to 3, whereby the triggered counter is set to a value corresponding to the start of the call.

5. A method according to any of claims 1 to 4, whereby the counter is incrementing as non-speech frames are received and is reset each time a speech frame is received.

6. A method according to any of claims 1 to 5, whereby the network element notifies the users of the communication device and said another communication device before disconnection of the voice communication.

7. A method according to claim 6, whereby the notification is provided via a beep tone or a short message.

8. A network element for call time management of a voice communication established by a communication device (CD) with another communication device within a wireless telecommunications network (TN) via a base station (BTS), the network element comprising:
means (SM) for triggering a counter associated with the call,
means (SM) for identifying speech frames and non-speech frames received by the base station from traffic frames sent by the communication device and said another communication device using a discontinuous transmission,
means (SM) for evaluating the counter to determine whether the counter has exceeded a predefined upper limit value in order to disconnect the voice communication.

9. A network element according to claim 8, whereby the network element is included in the base station.

10. A network element according to claim 8, whereby the network element is included in a base station controller.

11. A computer program capable of being implemented within a network element for call time management of a voice communication established by a communication device (CD) with another communication device within a wireless telecommunication network (TN) via a base station (BTS), said program comprising instructions which, when the program is loaded and executed:
triggering (S4) a counter associated with the call,
identifying (S5) speech frames and non-speech frames received by the base station from traffic frames sent by the communication device and said another communication device using a discontinuous transmission,
if the counter reaches a given threshold, disconnecting (S6) the voice communication.
